# EUROPEAN PATENT SPECIFICATION

(11) **EP 3 594 493 B1**
(45) Date of publication and mention of the grant of the patent: **09.09.2020**
(21) Application number: 19185664.0
(22) Date of filing: 11.07.2019
(51) Int. Cl.: F03D 17/00, F03D 7/02

(54) **METHOD TO MONITOR MECHANICAL LOADS OF AN ACTUATOR FOR THE ROTATIONAL POSITIONING OF A MOVABLE PART OF A WIND TURBINE**
VERFAHREN ZUR ÜBERWACHUNG MECHANISHER BELASTUNGEN EINES STELLANTRIEBS ZUR DREHPOSITIONIERUNG EINES BEWEGLICHEN BAUTEILS EINER WINDKRAFTANLAGE
PROCÉDÉ DE SURVEILLANCE DES CHARGES MÉCANIQUES D'UN ACTUATEUR POUR LE POSITIONEMENT ROTATIF D'UN COMPOSANT MOBILE D'UNE ÉOLIENNE

(30) Priority: 12.07.2018 IT 201800007145
(43) Date of publication of application: 15.01.2020
(73) Proprietor: Bonfiglioli Riduttori S.p.A., 40012 Calderara di Reno (IT)
(72) Inventor: COMINETTI, Paolo, 40012 CALDERARA DI RENO (BO) (IT); LAMBRUSCHI, Roberto, 40012 CALDERARA DI RENO (BO) (IT); TORCELLI, Andrea, 35139 PADOVA (IT)
(74) Representative: Maccagnan, Matteo

(56) References cited:
- EP-A2- 2 535 570
- EP-A2- 2 631 472
- DE-A1-102016 002 006
- US-A1- 2018 135 598

## Description

### CROSS-REFERENCE TO RELATED APPLICATIONS

This patent application claims priority from Italian patent application no. 102018000007145 filed on July 12, 2018

### TECHNICAL FIELD

The present invention concerns a method to monitor mechanical loads of a positioning actuator for the rotational positioning of a movable part of a wind turbine and a corresponding rotational positioning system of a wind turbine.

### BACKGROUND ART

As is known, a wind turbine comprises a tower, a movable nacelle mounted on top of the tower, a rotor comprising a plurality of blades and mounted on the nacelle, and an electric generator, which is arranged in the nacelle and is coupled to the hub of the turbine, typically by means of the interposition of a speed reducer.

The wind turbine comprises an electromechanical yaw control system for the nacelle, i.e. a system for controlling the rotational positioning of the nacelle around a substantially vertical axis. The yaw control system allows the nacelle, and therefore the rotor blades, to be optimally pitched relative to the wind direction, in order to maximise the output of the wind turbine.

In particular, the yaw control system comprises a toothed ring that is integral with the tower and one or more positioning actuators, each of which is mounted on the nacelle and comprises a speed reducer, an electric motor coupled to the high-speed shaft of the speed reducer, and a pinion coupled to the low-speed shaft of the speed reducer and engaged with the toothed ring. A control unit controls the positioning actuator on the basis of parameters manually entered by an operator, or automatically as a function of signals generated by wind direction sensors mounted on the tower.

Typically, the rotor blades are also movable around their longitudinal axis, which is orthogonal to the rotation axis of the rotor, and the wind turbine comprises an electromechanical or hydraulic system to control the pitch of the blades relative to the rotation axis to change the aerodynamic load of the wind on the blades. In particular, for each blade, the blade pitch control system comprises a toothed ring that is integral with the blade and a respective positioning actuator, which is essentially of the same type and is controlled in essentially the same way as that described above for yaw control, is housed in the rotor hub and has the relative pinion coupled to the toothed ring of the blade.

The direction and intensity of the wind can quickly change during the arrival of an electrical or ordinary storm, generating intense mechanical forces on the body of the nacelle and on the rotor blades that eventually discharge onto its relative positioning actuators, regardless of whether the latter are working or at rest. The external forces generated by the wind can cause numerous positioning actuator overload events that can seriously damage the positioning actuators or reduce their residual life so as to suddenly make the yaw of the nacelle, and/or the pitch of one or more of the blades, impossible to control, with all the related negative consequences.

An example of a prior art document is EP 2 535 570 A2.

### DISCLOSURE OF INVENTION

The purpose of the present invention is to provide a method for monitoring the overload situations of the positioning actuators of the wind turbine, which allows the drawbacks described above to be overcome and which, at the same time, is easy and inexpensive to implement.

According to the present invention a method for monitoring mechanical loads of at least one positioning actuator for the rotational positioning of a movable part of a wind turbine and a rotational positioning system of a wind turbine are provided, as defined in the attached claims.

### BRIEF DESCRIPTION OF THE DRAWINGS

The present invention will now be described with reference to the accompanying drawings, which illustrate a non-limiting embodiment thereof, wherein:
- Figure 1 shows a frontal view of a wind turbine; and
- Figure 2 shows, from a perspective and partially cross-sectional view, the wind turbine nacelle in Figure 1 incorporating the rotational positioning system of the present invention; and
- Figure 3 shows, from a perspective and partially cross-sectional view, the rotor of the wind turbine in Figure 1 incorporating the rotational positioning system of the present invention;
- Figure 4 shows the rotor in Figure 3 from a lateral and partially cross-sectional view wherein a rotor blade has been removed for greater clarity, said rotor incorporating an additional embodiment of the rotational positioning system of the present invention; and
- Figure 5 shows the nacelle in Figure 2 from a side and partially cross-sectional view, said nacelle incorporating an additional embodiment of the rotational positioning system of the present invention.

### BEST MODE FOR CARRYING OUT THE INVENTION

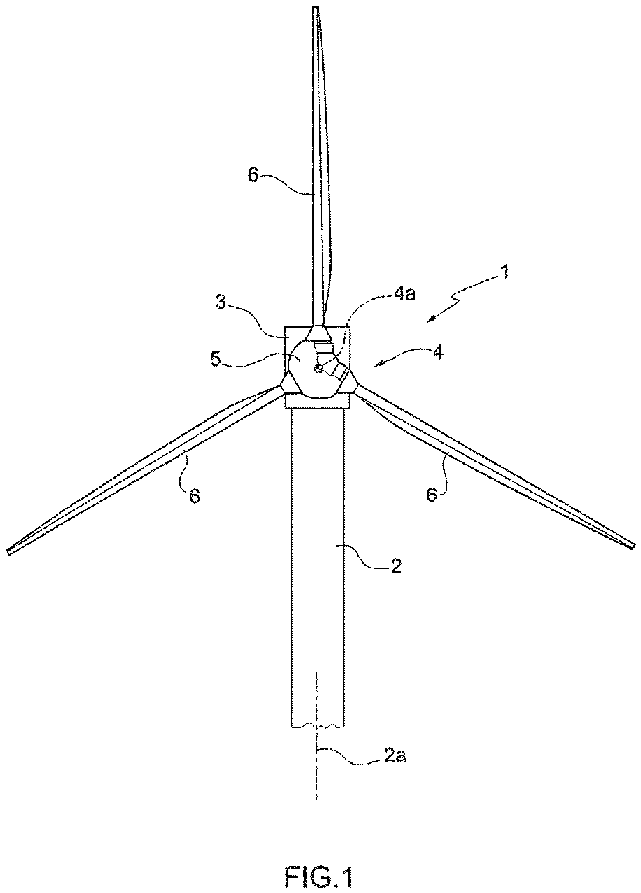

In Figure 1, the number 1 generally indicates, as a whole, a wind turbine, which comprises a tower 2, a movable nacelle 3 mounted on top of the tower 2 to perform an azimuthal rotation around a vertical axis 2a, and a rotor 4. The rotor comprises a hub 5 covered by a nose cone and a plurality of blades 6 extending radially from the hub 5, is mounted on the nacelle 3, and is designed to rotate around a rotation axis 4a transverse to the axis 2a.

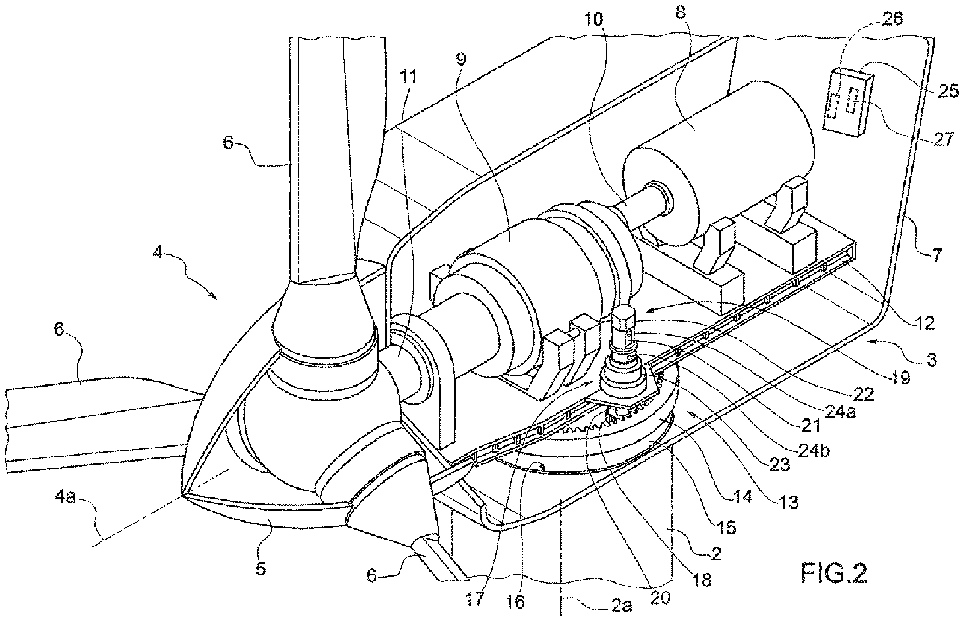

With reference to Figure 2, the nacelle 3 comprises an external shell 7, which houses an electric generator 8, and a speed reducer 9, which has the high-speed shaft 10 integral with the shaft of the electric generator 8 and the low-speed shaft 11 integral with the hub 5 of the rotor 4. The shell 7 houses a support frame 12, which is integral with the shell 7 and supports, among other things, the electric generator 8 and the speed reducer 9.

The wind turbine 1 comprises a rotational positioning system, which comprises a yaw control system 13 to control the rotational positioning of the nacelle 3 around the vertical axis 2a. The yaw control system 13 comprises an internally toothed ring 14, which is attached to an upper end 15 of the tower 2 projecting into the nacelle 3 through a lower hole 16 in the shell 7, to at least one positioning actuator 17, which is mounted inside the shell 7 in an integral manner with the support frame 12 and comprises a pinion 18 engaged with the toothed ring 14.

The positioning actuator 17 comprises a gearmotor 19 having an output shaft 20 that is integral with the pinion 18 and a control device 21, comprising, for example, an inverter or a PLC (Programmable Logic Controller), to control the gearmotor 19. In particular, the gearmotor 19 comprises an electric machine 22, which normally works as a motor driven by the control device 21, and a speed reducer 23, which has the high-speed shaft (not shown) integral with the shaft (not shown) of the electric machine 22 and the low-speed shaft which coincides with the output shaft 20.

Advantageously, the gearmotor 19 is of the self-braking type, i.e. the electric machine 22 is a self-braking motor.

The yaw control system 13 comprises at least two sensors coupled to the positioning actuator 17 to detect at least two indicative load parameters, the first one, of a torque on the positioning actuator 17 and, the second one, of an angular speed of the positioning actuator 17.

In the particular example shown in Figure 2, the control device 21 comprises an inverter, indicated in Figure 2 with the same number 21, and the yaw control system 13 comprises a current sensor 24a located in the inverter 21 to detect, as the first load parameter, the current generated by the inverter 21 when the electric machine 22 works as an electric generator due to external forces, for example due to the wind, which act on the nacelle 3 by making it rotate around the axis 2a, and an angular speed and/or position sensor 24b, preferably comprising an encoder, coupled to the rotary shaft of the electric machine 22 to detect, as a second load parameter, increases in angular position as the weather changes and/or an angular speed of this rotary shaft.

In fact, the inverter 21 is a substantially bidirectional device having a power supply section and an alternating current output section, which is electrically connected to the electric machine 22, through which the electric machine 22 is normally powered and controlled to work as an electric motor and which, in case of forced rotation of the gearmotor 19, converts the energy generated by the electric machine 22 into an electric signal on the power supply section that is detectable by means of the current sensor 24a.

It should be noted that the inverter 21 typically comprises the current sensor 24a and the angular speed and/or position sensor 24b, the latter being used to acquire a feedback signal from the electric machine 22.

Therefore, the first load parameter predominantly expresses a static component of the mechanical load acting on the positioning actuator 17 while the second load parameter predominantly expresses a dynamic component of the mechanical load acting on the positioning actuator 17. In addition, the encoder of sensor 24b can comprise two outputs, a first one to provide increases in angular position and a second one to provide an indication of the angular speed.

The rotational positioning system of the wind turbine 1 comprises a processing and control unit 25 configured to control the positioning actuator 17 in order to adjust the yaw of the nacelle 3. The control of the positioning actuator 17 is performed on the basis of parameters manually entered by an operator, or automatically as a function of signals generated by wind direction sensors, of a known type and not shown, mounted, for example, on the tower 2.

The processing and control unit 25 is also configured to receive the current detected by the current sensor 24a and increases in the angular position or the angular speed detected by the angular position sensor 24b; to process the current detected to obtain the torque TQ acting on the positioning actuator 17; to process the increases in the angular position or the angular speed detected to obtain the angular speed SP of the positioning actuator 17; and to compare the obtained torque TQ with a first torque threshold TQ1 and the obtained angular speed SP with a first angular speed threshold SPM1. The torque threshold TQM1 and the angular speed threshold SP1 represent static and dynamic mechanical load limits that can be supported by the positioning actuator 17.

It should be noted that if the output of the sensor 24b, which provides the indicative signal of the angular speed, is used, the processing of this signal by the processing and control unit 25 consists, in practice, in filtering this signal to obtain, for example, an average angular speed SP in a moving time window.

The processing and control unit 25 comprises a digital memory 26 and is configured to generate an event whenever the obtained torque TQ exceeds the threshold TQM1 or the obtained angular speed SP exceeds the threshold SPM1; to store data concerning each event in the memory 26, for example the torque value obtained and/or the angular speed value obtained and a time stamp of the event; and to estimate the residual life of the positioning actuator 17 on the basis of the data of stored events. For example, the residual life of the positioning actuator 17 can be expressed as residual hours or days of operation.

Advantageously, the processing and control unit 25 is configured to obtain a mechanical power PW, due to the external forces acting on the nacelle 3, as a function of the obtained torque TQ and of the obtained angular speed SP and to generate an event whenever the mechanical power obtained PW exceeds a first power threshold PWM1. The mechanical power PW can, for example, be obtained as a product of the torque TQ, the angular speed SP, and a constant for the alignment of the unit of measurement. In this case, the data concerning each stored event comprise, in addition to the time stamp of the event, the mechanical power value obtained. The mechanical power threshold PWM1 represents a power limit that can normally be dissipated by the gearmotor 19 brake when it is slid by external forces.

Advantageously, the processing and control unit 25 is configured to generate an alarm signal whenever the obtained torque TQ exceeds the torque threshold TQM1 and/or the obtained angular speed SP exceeds the angular speed threshold SPM1. Advantageously, the processing and control unit 25 is configured to generate an alarm signal even or only whenever the mechanical power obtained PW exceeds the power threshold PWM1.

Advantageously, the processing and control unit 25 is configured to generate an event whenever the obtained torque TQ exceeds a second torque threshold TQM2 and/or the obtained angular speed SP exceeds a second angular speed threshold SPM2 and/or the mechanical power PW exceeds a second power threshold PWM2 and to store these additional events in the memory 26.

The second thresholds TQM2, SPM2, and PWM2 have values that are not necessarily higher than the corresponding first thresholds TQM1, SPM1, and PWM1 and are used to define, for each of the monitored variables such as torque TQ, angular speed, and mechanical power PW, a corresponding window of values at the occurrence of which it is necessary to store corresponding data that are used to refine the estimate of the residual life of the positioning actuator 17 and, possibly, to predict any damage.

Advantageously, the processing and control unit 25 comprises a communication module 27 connected via cable or wirelessly to a remote monitoring station (not shown) to transmit data concerning these events and the estimated residual life of the positioning actuator 17.

Preferably, the processing and control unit 25 is housed in the shell 7 of the nacelle 3, as shown in the example in Figure 2.

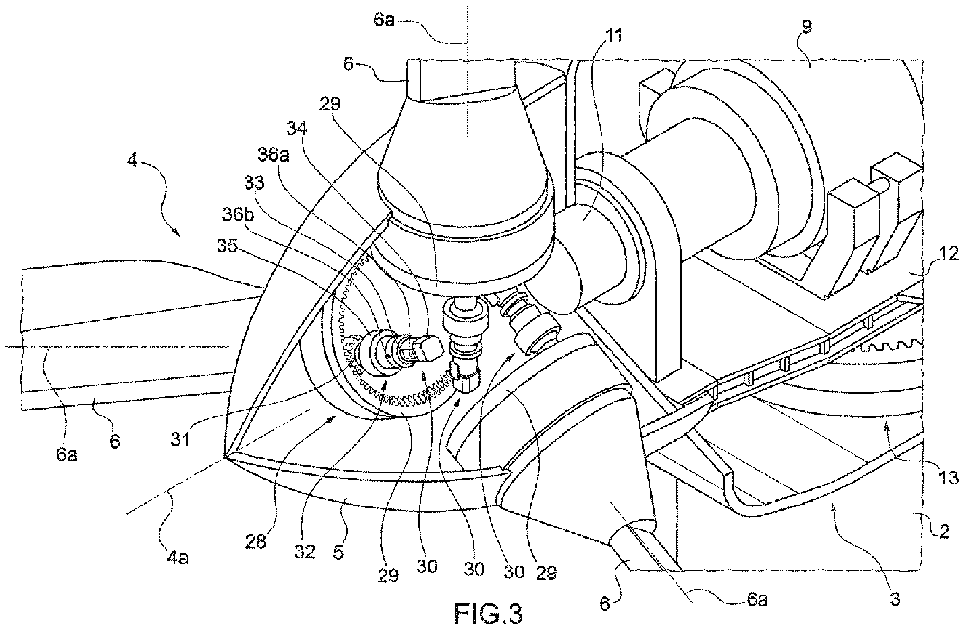

With reference to Figure 3, each blade 6 is movable relative to the hub 5 for rotating around a longitudinal axis 6a orthogonal to the rotation axis 4a of the rotor 4 in order to adjust the pitch of the blade 6 relative to the rotation axis 4a. The rotational positioning system of the wind turbine 1 comprises a blade pitch control system 28 to control the rotational positioning of the blades 6 around their respective longitudinal axes 6a with the effect of changing the aerodynamic load of the wind on the blades 6.

The blade pitch control system 28 comprises, for each blade 6, an internally toothed ring 29 that is integral with the blade 6 and a respective positioning actuator 30, which is essentially of the same type as the positioning actuator 17, is housed in the hub 5, and has the relative pinion 31 engaged with the ring 29. In particular, each positioning actuator 30 comprises a respective gearmotor 32 and a respective control device 33, comprising, for example, an inverter or a PLC, and the gearmotor comprises a respective electric machine 34 working normally as a motor and a respective speed reducer 35 having the low-speed shaft (not shown) integral with the pinion 31.

The blade pitch control system 28 comprises a plurality of sensor pairs, each sensor pair being coupled to a respective positioning actuator 30 to detect at least two indicative load parameters, a first one, of a torque on the positioning actuator 30 and, the second one, of an angular speed of the positioning actuator 30.

In the particular example shown in Figure 3, the control device 33 comprises an inverter, indicated in Figure 3 with the same number 33, and the blade pitch control system 28 comprises, for each positioning actuator 30, a current sensor 36a positioned in the respective inverter 33 to detect, as the first load parameter, the current generated by the inverter 33 when the respective electric machine 34 works as an electric generator due to external forces, for example due to the wind, which act on the respective blade 6 by making it rotate around its respective longitudinal axis 6a, and an angular speed and/or position sensor 36b, preferably comprising an encoder, coupled to the rotary shaft of the electric machine 34 to detect, as a second load parameter, increases in angular position as the weather changes or the angular speed of this rotary shaft.

The inverter 33 is basically similar to the inverter 21 and therefore typically comprises the current sensor 36a and the angular speed and/or position sensor 36b.

The processing and control unit 25 is shared between the yaw control system 13 and the blade pitch control system 28. The processing and control unit 25 performs functions and processes for the blade pitch control system 28 that are similar to those described above with reference to the yaw control system 13.

In particular, the processing and control unit 25 is configured to control the positioning actuators 30 in order to adjust the pitch of the blades 6. The control of the positioning actuators 30 is performed on the basis of parameters manually entered by an operator, or automatically as a function of signals generated by wind direction sensors.

The processing and control unit 25 is configured to receive the current detected by the current sensor 36a and the angular position and/or the angular speed detected by the angular speed and/or position sensor 36b associated with each positioning actuator 30 and to perform the same steps described above with reference to the positioning actuator 17 in order to generate an event whenever the torque and/or the angular speed and/or the mechanical power obtained through the measurements made by the sensors 36a-b of a certain positioning actuator 30 exceed their respective first torque, angular speed, and mechanical power thresholds, to store data concerning each event in the memory 16, and to estimate the residual life of the positioning actuator 30 on the basis of the stored event data.

In addition, similarly to what was described earlier with reference to the positioning actuator 17, the processing and control unit 25 is configured to generate an alarm signal whenever the torque and/or the angular speed and/or the mechanical power exceed their respective second torque, angular speed, and mechanical power thresholds.

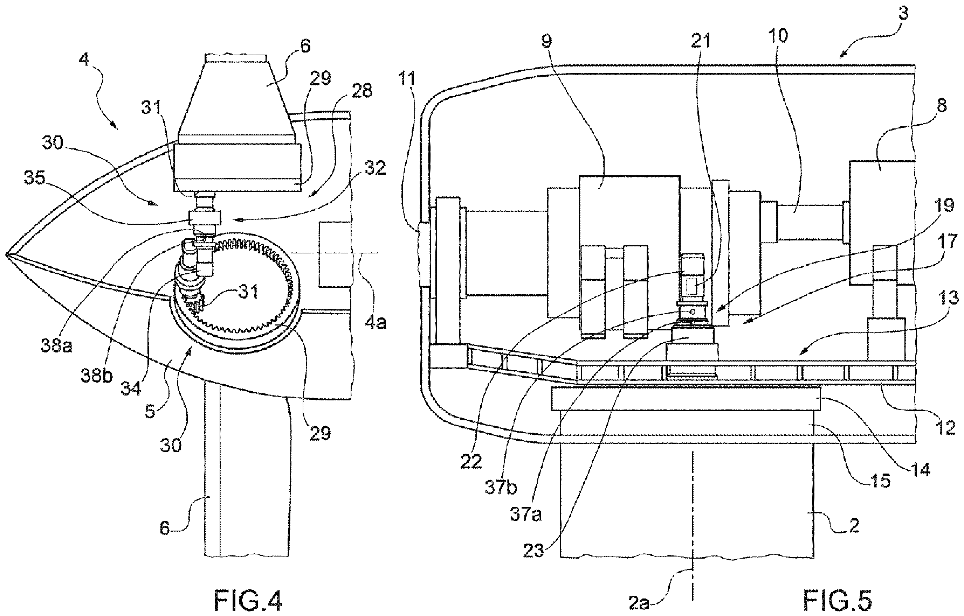

According to additional embodiments of the present invention shown in Figures 4 and 5, the yaw control system 13 (Figure 5) and/or the blade pitch control system 28 (Figure 4) comprise, instead of each of the relative pairs of sensors 24a-b 36a-b, a torque sensor - indicated by 37a in Figure 5 and by 38a in Figure 4 - of a known type that comprises, for example, a torque meter mounted in a rotary joint or shaft (not visible in Figures 4 and 5) connecting the electric machine 22, 34 and the speed reducer 23, 35 of the relative gearmotor 19, 32 to detect, as first load parameter, a torque in said rotary joint or shaft, and a revolution sensor - indicated by 37b in Figure 5 and by 38b in Figure 4 - coupled to said rotary joint or shaft to detect, as second load parameter, an angular speed of the rotary joint or shaft.

The processing and control unit 25 works in the way described earlier with the difference that the second load parameter coincides with the quantity to be evaluated (torque) and that, therefore, the processing of the detected torque that is performed by the processing and control unit 25 essentially consists of a filtering of the values detected.

From the above description, it is clear that the rotational positioning system of the wind turbine 1, comprising the yaw control system 13, the blade pitch control system 28, and the processing and control unit 25, implements a method for monitoring mechanical overloads of the positioning actuators 17 and 30 used for the rotational positioning of the nacelle 3 and of the blades 6 of the wind turbine 1.

Although the invention described above makes particular reference to a very specific embodiment, it is not to be considered limited to that embodiment, since it encompasses all those variants, modifications, or simplifications covered by the attached claims, such as, for example:
- a yaw control system 13 that comprises a plurality of positioning actuators 17;
- a rotational positioning system comprising only the yaw control system 13; and
- a rotational positioning system comprising only the blade pitch control system 28.

The main advantage of the rotational positioning system for a wind turbine 1 and of the method for monitoring the mechanical overloads of positioning actuators described above is to simplify and, in particular, to reduce the maintenance operations necessary for verifying the correct operation of the positioning actuators of a wind turbine 1. In addition, the positioning system and the monitoring method described above allow to estimate the residual life of the positioning actuators and to detect the effects of external loads on the wind turbine 1, in order to validate the simulations made in the design phase.

## Claims

1. A method to monitor mechanical loads of at least one positioning actuator for the rotational positioning of a movable part of a wind turbine, the method comprising:
- detecting at least two load parameters indicating, a first one, a torque exerted upon the positioning actuator (17, 30) and, the second one, an angular speed of the positioning actuator (17, 30), due to external forces acting upon the movable part (3, 6), by means of respective sensor means (24a-b, 36a-b; 37a-b, 38b-a) coupled to the positioning actuator (17, 30);
- processing the detected load parameters in order to obtain torque (TQ) and angular speed (SP) associated with the positioning actuator (17, 30);
- generating an event every time the obtained torque (TQ) exceeds a torque threshold (TQM1) or the obtained angular speed (SP) exceeds an angular speed threshold (SPM1);
- storing data concerning every event; and
- processing the stored event data in order to estimate the residual life of said positioning actuator (17, 30).

2. The method according to claim 1, wherein said positioning actuator (17, 30) comprises a gearmotor (19, 32); the first load parameter being a torque detected on a rotary joint or shaft of the gearmotor (19, 32) and the second load parameter being an angular speed of said rotary joint or shaft.

3. The method according to claim 1, wherein said positioning actuator (17, 30) comprises an electric machine (22, 34) normally working as a motor and a control device comprising an inverter (21, 33) to control the electric machine (22, 34); the first load parameter being a current generated by the inverter (21, 33) when the electric machine (22, 34) works as a generator due to the action of said external forces and the second load parameter being an angular speed of a rotary shaft of said electric machine (22) .

4. The method according to any one of the claims from 1 to 3 and comprising:
- generating an alarm signal every time said obtained torque (TQ) exceeds said torque threshold (TQM1) and/or said obtained angular speed (SP) exceeds said angular speed threshold (SPM1).

5. The method according to any one of the claims from 1 to 4 and comprising:
- obtaining a mechanical power (PW) due to said external forces as a function of said obtained torque (TQ) and of said obtained angular speed (SP);
- generating an event every time the obtained mechanical power (PW) exceeds a power threshold (PWM1).

6. The method according to any one of the claims from 1 to 3 and comprising:
- obtaining a mechanical power (PW) due to said external forces as a function of said obtained torque (TQ) and of said obtained angular speed (SP);
- generating an alarm signal every time said obtained torque (TQ) exceeds said torque threshold (TQM1) and/or said obtained angular speed (SP) exceeds said angular speed threshold (SPM1) and/or said obtained mechanical power (PW) exceeds said mechanical power threshold (PWM1).

7. A rotational positioning system of a wind turbine comprising at least one movable part (3, 6), the system comprising at least one positioning actuator (17, 30) for the rotational positioning of said movable part (3, 6), and being **characterized in that** it comprises sensor means (24a-b, 36a-b; 37a-b, 38a-b), which are coupled to the respective positioning actuator (17, 30) so as to detect at least two load parameters indicating, a first one, a torque exerted upon the positioning actuator (17, 30) and, the second one, an angular speed of the positioning actuator (17, 30), due to external forces acting upon the movable part (3, 6), and processing and controlling means (25), which are provided with digital memory means (26) and are configured to implement the method according to any one of the claims from 1 to 6.

8. The system according to claim 7, wherein said at least one movable part comprises a nacelle (3) of the wind turbine (1) and said respective positioning actuator (17, 30) is designed to adjust the yaw of the nacelle (3).

9. The system according to claim 7, wherein said at least one movable part comprises a blade (6) of a rotor (4) of the wind turbine (1) and said respective positioning actuator (17, 30) is designed to adjust the pitch of the blade (6) relative to the rotation axis (4a) of the rotor (4) .

10. A system according to any one of the claims from 7 to 9, wherein said at least one positioning actuator (17, 30) comprises a gearmotor (19, 32) and said sensor means (37a-b, 38a-b) comprise a torque sensor (37a, 38a), preferably comprising a torque meter, which is mounted in a rotary joint or shaft of the gearmotor (19, 32) so as to detect, as first load parameter, a torque acting upon said rotary joint or shaft, and a revolution sensor (37b, 38b), which is coupled to said rotary joint or shaft so as to detect, as second load parameter, an angular speed of said rotary joint or shaft.

11. The system according to any one of the claims from 7 to 9, wherein said at least one positioning actuator (17, 30) comprises an electric machine (22, 34) normally working as a motor and an inverter (21, 33) to control the electric machine (22, 34), and said sensor means (24a-b, 36a-b) comprise a current sensor (24a, 36a) to detect, as first load parameter, a current generated by the inverter (21, 33) when the electric machine (22, 34) works as a generator due to the action of said external forces, and an angular position sensor, preferably comprising an encoder, to detect, as second load parameter, an angular speed of a rotary shaft of said electric machine (22).

## Patentansprüche

1. Verfahren, um mechanische Lasten mindestens eines Positionieraktors zur Drehpositionierung eines beweglichen Abschnitts einer Windkraftanlage zu überwachen, wobei das Verfahren Folgendes umfasst:
- Detektieren von mindestens zwei Lastparametern, wovon ein Erster ein Drehmoment, das auf den Positionieraktor (17, 30) ausgeübt wird, und der Zweite eine Drehzahl des Positionieraktors (17, 30) aufgrund externer Kräfte, die auf den beweglichen Abschnitt (3, 6) wirken, angibt, mittels entsprechender Sensormittel (24a-b, 36a-b; 37a-b, 38b-a), die an den Positionieraktor (17, 30) gekoppelt sind;
- Verarbeiten der detektierten Lastparameter, um ein Drehmoment (TQ) und eine Drehzahl (SP), die mit dem Positionieraktor (17, 30) verbunden sind, zu erhalten;
- Erzeugen eines Ereignisses jedes Mal, wenn das erhaltene Drehmoment (TQ) einen Drehmomentschwellenwert (TQM1) überschreitet oder die erhaltene Drehzahl (SP) einen Drehzahlschwellenwert (SPM1) überschreitet;
- Speichern von Daten bezüglich jedes Ereignisses und
- Verarbeiten der gespeicherten Ereignisdaten, um die Restlebensdauer des Positionieraktors (17, 30) zu schätzen.

2. Verfahren nach Anspruch 1, wobei der Positionieraktor (17, 30) einen Getriebemotor (19, 32) umfasst; der erste Lastparameter ein Drehmoment ist, das an einem Drehgelenk oder einer Welle des Getriebemotors (19, 32) detektiert wird, und der zweite Lastparameter eine Drehzahl des Drehgelenks oder der Welle ist.

3. Verfahren nach Anspruch 1, wobei der Positionieraktor (17, 30) eine Elektromaschine (22, 34), die normalerweise als ein Motor arbeitet, und eine Steuervorrichtung, die einen Wechselrichter (21, 33) umfasst, um die Elektromaschine (22, 34) zu steuern, umfasst; der erste Lastparameter ein Strom ist, der durch den Wechselrichter (21, 33) aufgrund der Wirkung der äußeren Kräfte erzeugt wird, wenn die Elektromaschine (22, 34) als ein Generator arbeitet, und der zweite Lastparameter eine Drehzahl der Welle der Elektromaschine (22) ist.

4. Verfahren nach einem der Ansprüche 1 bis 3, das Folgendes umfasst:
- Erzeugen eines Alarmsignals jedes Mal, wenn das erhaltene Drehmoment (TQ) den Drehmomentschwellenwert (TQM1) überschreitet und/oder die erhaltene Drehzahl (SP) den Drehzahlschwellenwert (SPM1) überschreitet.

5. Verfahren nach einem der Ansprüche 1 bis 4, das Folgendes umfasst:
- Erhalten einer mechanischen Leistung (PW) aufgrund der äußeren Kräfte als eine Funktion des erhaltenen Drehmoments (TQ) und der erhaltenen Drehzahl (SP) und
- Erzeugen eines Ereignisses jedes Mal, wenn die erhaltene mechanische Leistung (PW) einen Leistungs schwellenwert (PWM1) überschreitet.

6. Verfahren nach einem der Ansprüche 1 bis 3, das Folgendes umfasst:
- Erhalten einer mechanischen Leistung (PW) aufgrund der äußeren Kräfte als eine Funktion des erhaltenen Drehmoments (TQ) und der erhaltenen Drehzahl (SP) und
- Erzeugen eines Alarmsignals jedes Mal, wenn das erhaltene Drehmoment (TQ) den Drehmomentschwellenwert (TQM1) überschreitet und/oder die erhaltene Drehzahl (SP) den Drehzahlschwellenwert (SPM1) überschreitet und/oder die erhaltene mechanische Leistung (PW) den mechanischen Leistungsschwellenwert (PWM1) überschreitet.

7. Drehpositioniersystem einer Windkraftanlage, die mindestens einen beweglichen Abschnitt (3, 6) umfasst, wobei das System mindestens einen Positionieraktor (17, 30) für die Drehpositionierung des beweglichen Abschnitts (3, 6) umfasst und **gekennzeichnet ist durch** Sensormittel (24a-b, 36a-b; 37a-b, 38b-a), die an den entsprechenden Positionieraktor (17, 30) gekoppelt sind, um mindestens zwei Lastparameter zu detektieren, wovon ein Erster ein Drehmoment, das auf den Positionieraktor (17, 30) ausgeübt wird, und der Zweite eine Drehzahl des Positionieraktors (17, 30) aufgrund externer Kräfte, die auf den beweglichen Abschnitt (3, 6) wirken, angibt, und Verarbeitungs- und Steuermittel (25), die mit digitalen Speichermitteln (26) versehen sind und konfiguriert sind, das Verfahren nach einem der Ansprüche 1 bis 6 zu implementieren.

8. System nach Anspruch 7, wobei der mindestens eine bewegliche Abschnitt eine Gondel (3) der Windkraftanlage (1) umfasst und der entsprechende Positionieraktor (17, 30) ausgelegt ist, das Gieren der Gondel (3) einzustellen.

9. System nach Anspruch 7, wobei der mindestens eine bewegliche Abschnitt ein Rotorblatt (6) eines Rotors (4) der Windkraftanlage (1) umfasst und der entsprechende Positionieraktor (17, 30) ausgelegt ist, den Anstellwinkel des Rotorblatts (6) in Bezug auf die Drehachse (4a) des Rotors (4) einzustellen.

10. System nach einem der Ansprüche 7 bis 9, wobei der mindestens eine Positionieraktor (17, 30) einen Getriebemotor (19, 32) umfasst und die Sensormittel (37a-b, 38b-a) einen Drehmomentsensor (37a, 38a), der bevorzugt einen Drehmomentmesser umfasst und an einem Drehgelenk oder einer Welle des Getriebemotors (19, 32) montiert ist, um als einen ersten Lastparameter ein Drehmoment, das auf das Drehgelenk oder die Welle wirkt, zu detektieren, und einen Umdrehungssensor (37b, 38b), der an das Drehgelenk oder die Welle gekoppelt ist, um als einen zweiten Lastparameter eine Drehzahl des Drehgelenks oder der Welle zu detektieren, umfassen.

11. System nach einem der Ansprüche 7 bis 9, wobei der mindestens eine Positionieraktor (17, 30) eine Elektromaschine (22, 34), die normalerweise als ein Motor arbeitet, und einen Wechselrichter (21, 33), um die Elektromaschine (22, 34) zu steuern, umfasst und die Sensormittel (24a-b, 36a-b) einen Stromsensor (24a, 36a), um als einen ersten Lastparameter einen Strom zu detektieren, der durch den Wechselrichter (21, 33) aufgrund der Wirkung der äußeren Kräfte erzeugt wird, wenn die Elektromaschine (22, 34) als ein Generator arbeitet, und einen Winkelstellungsensor, der bevorzugt einen Codierer umfasst, um als einen zweiten Lastparameter eine Drehzahl der Drehwelle der Elektromaschine (22) zu detektieren, umfassen.

## Revendications

1. Procédé de surveillance de charges mécaniques d'au moins un actionneur de positionnement pour le positionnement en rotation d'une partie mobile d'une éolienne, le procédé comprenant:
- la détection d'au moins deux paramètres de charge indiquant, le premier, un couple exercé sur l'actionneur de positionnement (17, 30), et le deuxième, une vitesse angulaire de l'actionneur de positionnement (17, 30), dus à des forces externes agissant sur la partie mobile (3, 6), au moyen de moyens de capteur (24a-b, 36a-b ; 37a-b, 38b-a) respectifs couplés à l'actionneur de positionnement (17, 30) ;
- le traitement des paramètres de charge détectés afin d'obtenir un couple (TQ) et une vitesse angulaire (SP) associés à l'actionneur de positionnement (17, 30) ;
- la génération d'un événement chaque fois que le couple (TQ) obtenu dépasse un seuil de couple (TQM1) ou que la vitesse angulaire (SP) obtenue dépasse un seuil de vitesse angulaire (SPM1) ;
- le stockage des données concernant chaque événement ; et
- le traitement des données d'événements stockées afin d'estimer la durée de vie résiduelle dudit actionneur de positionnement (17, 30).

2. Procédé selon la revendication 1, dans lequel ledit actionneur de positionnement (17, 30) comprend un moteur à engrenages (19, 32) ; le premier paramètre de charge étant un couple détecté sur un joint ou arbre rotatif du moteur à engrenages (19, 32) et le deuxième paramètre de charge étant une vitesse angulaire dudit joint ou arbre rotatif.

3. Procédé selon la revendication 1, dans lequel ledit actionneur de positionnement (17, 30) comprend une machine électrique (22, 34) fonctionnant normalement comme un moteur et un dispositif de commande comprenant un inverseur (21, 33) pour commander la machine électrique (22, 34) ; le premier paramètre de charge étant un courant généré par l'inverseur (21, 33) lorsque la machine électrique (22, 34) fonctionne comme un générateur en raison de l'action desdites forces externes, et le deuxième paramètre de charge étant une vitesse angulaire d'un arbre rotatif de ladite machine électrique (22).

4. Procédé selon l'une quelconque des revendications de 1 à 3 et comprenant :
- la génération d'un signal d'alarme chaque fois que ledit couple (TQ) obtenu dépasse ledit seuil de couple (TQM1) et/ou que ladite vitesse angulaire (SP) obtenue dépasse ledit seuil de vitesse angulaire (SPM1).

5. Procédé selon l'une quelconque des revendications de 1 à 4 et comprenant :
- l'obtention d'une puissance mécanique (PW) due auxdites forces externes en fonction dudit couple (TQ) obtenu et de ladite vitesse angulaire (SP) obtenue ;
- la génération d'un événement chaque fois que la puissance mécanique (PW) obtenue dépasse un seuil de puissance (PWM1).

6. Procédé selon l'une quelconque des revendications de 1 à 3 et comprenant :
- l'obtention d'une puissance mécanique (PW) due auxdites forces externes en fonction dudit couple (TQ) obtenu et de ladite vitesse angulaire (SP) obtenue ;
- la génération d'un signal d'alarme chaque fois que ledit couple (TQ) obtenu dépasse ledit seuil de couple (TQM1) et/ou que ladite vitesse angulaire (SP) obtenue dépasse ledit seuil de vitesse angulaire (SPM1) et/ou que ladite puissance mécanique (PW) obtenue dépasse ledit seuil de puissance mécanique (PWM1).

7. Système de positionnement en rotation d'une éolienne comprenant au moins une partie mobile (3, 6), le système comprenant au moins un actionneur de positionnement (17, 30) pour le positionnement en rotation de ladite partie mobile (3, 6), et étant **caractérisé en ce qu'**il comprend des moyens de capteur (24a-b, 36a-b ; 37a-b, 38a-b), qui sont couplés à l'actionneur de positionnement (17, 30) respectif de manière à détecter au moins deux paramètres de charge indiquant, le premier, un couple exercé sur l'actionneur de positionnement (17, 30) et, le deuxième, une vitesse angulaire de l'actionneur de positionnement (17, 30), dus à des forces externes agissant sur la partie mobile (3, 6), et des moyens de traitement et de commande (25), qui sont pourvus de moyens de mémoire numérique (26) et configurés pour mettre en œuvre le procédé selon l'une quelconque des revendications de 1 à 6.

8. Système selon la revendication 7, dans lequel ladite au moins une partie mobile comprend une nacelle (3) de l'éolienne (1) et ledit actionneur de positionnement (17, 30) respectif est conçu pour régler le lacet de la nacelle (3).

9. Système selon la revendication 7, dans lequel ladite au moins une partie mobile comprend une pale (6) d'un rotor (4) de l'éolienne (1) et ledit actionneur de positionnement (17, 30) respectif est conçu pour régler le pas de la pale (6) par rapport à l'axe de rotation (4a) du rotor (4).

10. Système selon l'une quelconque des revendications de 7 à 9, dans lequel ledit au moins un actionneur de positionnement (17, 30) comprend un moteur à engrenages (19, 32) et lesdits moyens de capteur (37a-b, 38a-b) comprennent un capteur de couple (37a, 38a), de préférence comprenant un couplemètre, qui est monté dans un joint ou arbre rotatif du moteur à engrenages (19, 32) de manière à détecter, comme premier paramètre de charge, un couple agissant sur ledit joint ou arbre rotatif, et un capteur de tours (37b, 38b), qui est couplé audit joint ou arbre rotatif de manière à détecter, comme deuxième paramètre de charge, une vitesse angulaire dudit joint ou arbre rotatif.

11. Système selon l'une quelconque des revendications de 7 à 9, dans lequel ledit au moins un actionneur de positionnement (17, 30) comprend une machine électrique (22, 34) fonctionnant normalement comme un moteur, et un inverseur (21, 33) pour commander la machine électrique (22, 34), et lesdits moyens de capteur (24a-b, 36a-b) comprennent un capteur de courant (24a, 36a) pour détecter, comme premier paramètre de charge, un courant généré par l'inverseur (21, 33) lorsque la machine électrique (22, 34) fonctionne comme un générateur en raison de l'action desdites forces externes, et un capteur de position angulaire, comprenant de préférence un codeur, pour détecter, comme deuxième paramètre de charge, une vitesse angulaire d'un arbre rotatif de ladite machine électrique (22).
